# EUROPEAN PATENT APPLICATION

(11) **EP 2 202 236 A1**
(43) Date of publication of application: **30.06.2010**
(21) Application number: 08172679.6
(22) Date of filing: 23.12.2008
(51) Int. Cl.: C07F 9/653, C07F 15/00, C07B 53/00

(54) **Chiral ligands**

(71) Applicant: Solvias AG, 4057 Basel (CH)
(72) Inventor: The designation of the inventor has not yet been filed
(74) Representative: Savatier, Yves

(57) **Abstract**

Chiral compounds of the formula (1), which are optically pure or highly optically enriched 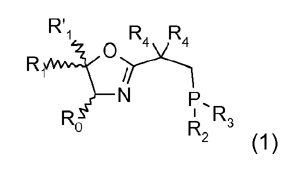 in which
R₀ is C₁-C₁₂-alkyl which is unsubstituted or substituted by 1 to 2 C₁-C₄-alkoxy; cyclopentyl or cyclohexyl, which is unsubstituted or substituted by 1 to 3 C₁-C₄-alkyl or C₁-C₄-alkoxy; or benzyl, phenyl or naphtyl which is unsubstituted or substituted by 1 to 3 C₁-C₄-alkyl, C₁-C₄-alkoxy, C₁-C₄-fluoroalkyl or C₁-C₄-fluoroalkoxy, F or Cl,
each of R₁ and R'₁ independently is hydrogen or has the meaning of R₀ whereby R₁, R'₁ and R₀ can be same or different,
R₂ and R₃ are independently a C-bonded hydrocarbon radical or a heterohydrocarbon radical, and
each of both R₄ is C₁-C₆-alkyl, cyclopentyl, cyclohexyl, phenyl, methylphenyl, methylbenzyl or benzyl, or both R₄ together form an aliphatic C₄-C₆ carbocycle. Metal complexes of these ligands are homogeneous catalysts for asymmetric addition reaction, particularly hydrogenations.

## Description

The present invention relates to new chiral bidentate ligands having an oxazoline ring which is substituted and in which the sp² carbon atom is linked to a phosphine group via a substituted ethylene bridge, to a process for their preparation, to metal complexes of these ligands; and to the use of the metal complexes as catalysts in asymmetric syntheses, particularly in hydrogenation of prochiral organic compounds which contain at least one carbon/carbon or carbon/heteroatom double bond.

Several chiral oxazoline-phosphine ligands have been reported in the recent years.

Pfaltz et al. (Org. Lett. 6 (2004) 2023-2026) described the so called SimplePhox ligands which have the following structure: 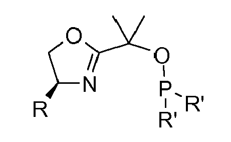 in which R is t-butyl or i-propyl and R' is phenyl or o-tolyl. Although Ir(I) complexes with these ligands proved to be very successful in the asymmetric hydrogenation of many alkenes, they have never been developed to a scale that is of industrial relevance. From an industrial point of view, these ligands have the following weak points:
- they are difficult and expensive to upscale:

- their poor stability makes it necessary to perform their purification by column chromatography under an Argon atmosphere.
- their poor stability prevents their storage over longer periods of time or makes storage very risky. Usually, these ligands are therefore directly converted to the corresponding Ir-complexes, which are more stable. Generally, storable ligands are much preferred, since one ligand can be used to prepare a multitude of different metal complexes. It is a severe drawback, when a ligand has to be converted to a metal complex in order to obtain a stable and storable product since this goes along with loss of modularity.

S.R. Gilbertson et al. (Chem. Commun. (1997) 975-976 and J. Org. Chem., 63 (1998) 8424-8431) described chiral oxazolin-phosphine ligands with the following general structure: 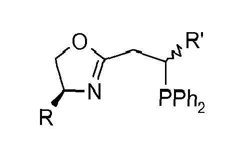 in which R is methyl, benzyl, phenyl or i-propyl and R' is hydrogen, methyl or phenyl. Selected diastereomers of these ligands where R' is not hydrogen achieved enantioselectivities (ee' s) over 90% in Pd-catalyzed allylic alkylations. Ligands where R' is hydrogen gave lower enantioselectivities. The synthesis of the ligands is tedious and not attractive for an upscale, i.e.
- the synthesis is long (at least 5 steps). This results in expensive ligands.
- if R' is not hydrogen, diastereomers have to be separated and an important part of an intermediate is lost. Also, efficient separation of diastereomers can be difficult and require expensive methods such as preparative HPLC.
- the whole synthesis is performed with a phosphinesulfide, which has to be reduced with Raney Nickel in the last step. Raney Nickels are complex solids that can only be partly characterized and which can have very different properties. As a consequence there is always a considerable risk that the reaction is difficult to reproduce and that the product will be contaminated with Ni.
- the modularity of the ligand is strongly hampered since the phosphine is introduced in the first step.

To date, it is still not possible to forecast which metal complexes with which ligands under which reaction conditions for which substrates give rise to practically usable catalytic activity and stereoselectivity. Therefore, there is a great need for further ligands which have an oxazoline and a phosphine group which are modular and of industrial relevance, i.e. which can be prepared in a simple and economic manner, which are stable and storable and which are also suitable as ligands for metal complexes and give good results as asymmetric catalysts.

The modularity and the ease to access different derivatives of ligands is a crucial factor. The most attractive ligands are those in which the phosphine group can be introduced in a late state of the synthesis.

The industrial relevance of chiral ligands rises with diminishing costs and one of the most important cost factors is the number of required steps for their synthesis. The most attractive ligands are those that can be prepared in a few synthetic steps and without expensive reagents.

It has now been found, surprisingly, that compounds, which are optically pure or highly optically enriched, with the following general formula (1): 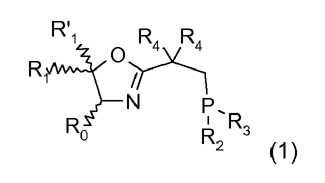 in which
R₀ is C₁-C₁₂-alkyl which is unsubstituted or substituted by 1 to 2 C₁-C₄-alkoxy; cyclopentyl or cyclohexyl, which is unsubstituted or substituted by 1 to 3 C₁-C₄-alkyl or C₁-C₄-alkoxy; or benzyl, phenyl or naphtyl which is unsubstituted or substituted by 1 to 3 C₁-C₄-alkyl, C₁-C₄-alkoxy, C₁-C₄-fluoroalkyl or C₁-C₄-fluoroalkoxy, F or CL, each of R₁ and R'₁ independently is hydrogen or has the meaning of R₀ whereby R₁, R'₁ and R₀ can be same or different,
R₂ and R₃ are independently a C-bonded hydrocarbon radical or a heterohydrocarbon radical, and
each of both R₄ is C₁-C₆-alkyl, cyclopentyl, cyclohexyl, phenyl, methylphenyl, methylbenzyl or benzyl, or both R₄ together form an aliphatic C₄-C₆ carbocycle,
(a) are excellent ligands for metal catalysts for asymmetric catalytic reactions, notably hydrogenation,
(b) are stable and storable,
(c) can be prepared in a highly economic and simple three-step synthesis, optionally even without the expensive Burgess reagent,
(d) can be prepared by a route which allows to introduce the phosphine group in the last step, thus allowing to exploit their high modularity in a very economic way, and
(e) surprisingly the substituents R₄ can have a very positive effect on the outcome of asymmetric catalytic reactions, notably an increased enantioselectivity.

The invention thus firstly provides new chiral compounds of the formula (1), which are optically pure or highly optically enriched, 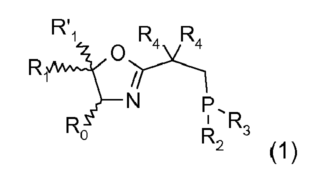 wherein R₀, R₁, R'₁, R₂, R₃ and R₄ are as defined above.

The term "highly optically enriched" here means having an enantiomeric selectivity of at least 90 %, preferably at least 95 %, more preferably at least 99 %.

R₄ is preferably methyl or phenyl.

Each of R₁ and R'₁ is independently preferably hydrogen, methyl, ethyl, n-butyl or phenyl. More preferably, each of R₁ and R'₁ is hydrogen.

R₀ is preferably i-propyl, i-butyl, t-butyl or benzyl. More preferably R₀ is i-propyl or t-butyl.

In the phosphine group -PR₂R₃, each of R₂ and R₃ is independently a C-bonded hydrocarbon radical or a heterohydrocarbon radical.

Preferably R₂ and R₃ are identical C-bonded hydrocarbon radicals or heterohydrocarbon radicals.

More preferably R₂ and R₃ are identical C-bonded aromatic hydrocarbon or heterohydrocarbon radicals

The C-bonded hydrocarbon radicals and heterohydrocarbon radicals R₂ and R₃ may be unsubstituted or substituted and/or contain heteroatoms selected from the group of O, S and N. They may contain 1 to 30, preferably 1 to 18 and more preferably 1 to 12 carbon atoms. The C-bonded hydrocarbon radical or the heterohydrocarbon radical may be selected from the group of linear or branched C₁-C₁₈-alkyl; unsubstituted or C₁-C₆-alkyl- or C₁-C₆-alkoxy-substituted C₅-C₁₂-cycloalkyl or C₅-C₁₂-cycloalkyl-CH₂-; phenyl, naphthyl, furyl or benzyl; or halogen-, C₁-C₆-alkyl-, trifluoromethyl-, C₁-C₆-alkoxy-, trifluoromethoxy-, (C₆H₅)₃Si, (C₁-C₁₂-alkyl)₃Si or secondary amino-substituted phenyl, naphthyl, furyl or benzyl.

In a preferred embodiment each of R₂ and R₃ is independently a C-bonded hydrocarbon radical or an O-atom containing heterohydrocarbon radical which has 1 to 18 carbon atoms and is unsubstituted or substituted by C₁-C₆-alkyl, trifluoromethyl, C₁-C₆-alkoxy, trifluoromethoxy, (C₁-C₄-alkyl)₂amino, (C₆H₅)₃Si, (C₁-C₁₂-alkyl)₃Si, and halogen.

Examples of R₂, R₃ as alkyl, which preferably contains 1 to 6 carbon atoms, are methyl, ethyl, n-propyl, i-propyl, n-butyl, i-butyl, t-butyl, and the isomers of pentyl and hexyl. Examples of R₂, R₃ as optionally alkyl-substituted cycloalkyl are cyclopentyl, cyclohexyl, methyl- and ethylcyclohexyl, and dimethylcyclohexyl. Examples of R₂, R₃ as alkyl- and alkoxy-substituted phenyl and benzyl are methylphenyl, dimethylphenyl, trimethylphenyl, ethylphenyl, methylbenzyl, methoxyphenyl, dimethoxyphenyl, trimethoxyphenyl, trifluoromethylphenyl, bis(trifluoromethyl)phenyl, tris(trifluoromethyl)phenyl, trifluoromethoxyphenyl, bis(trifluoromethoxy)phenyl, fluoro- and chlorophenyl and 3,5-dimethyl-4-methoxyphenyl.

Preferably R₂ and R₃ are identical C-bonded hydrocarbon radicals selected from the group of C₁₁-C₆-alkyl, unsubstituted cyclopentyl or cyclohexyl or cyclopentyl or cyclohexyl substituted by 1 to 3 C₁-C₄-alkyl or C₁-C₄-alkoxy, benzyl and particularly phenyl, which are unsubstituted or substituted by 1 to 3 C₁-C₄-alkyl, C₁-C₄-alkoxy, C₁-C₄-fluoroalkyl or C₁-C₄-fluoroalkoxy, F and Cl.

In a preferred embodiment, R₂ and R₃ are each C-bonded radicals selected from the group of linear or branched C₁-C₆-alkyl, unsubstituted cyclopentyl or cyclohexyl or cyclopentyl or cyclohexyl substituted by one to three C₁-C₄-alkyl or C₁-C₄-alkoxy, furyl, unsubstituted benzyl or benzyl substituted by one to three C₁-C₄-alkyl or C₁-C₄-alkoxy, and in particular unsubstituted phenyl or phenyl substituted by one to three F, Cl, C₁-C₄-alkyl, C₁-C₄-alkoxy, C₁-C₄-fluoroalkyl or C₁-C₄-fluoroalkoxy.

More preferably, R₂ and R₃ are each radicals selected from the group of C₁-C₆-alkyl, cyclopentyl, cyclohexyl, furyl and unsubstituted phenyl or phenyl substituted by one to three F, Cl, C₁-C₄-alkyl, C₁-C₄-alkoxy and/or C₁-C₄-fluoroalkyl.

The phosphine group -PR₂R₃ may be a cyclic phosphine group, for example one of the following formulae: 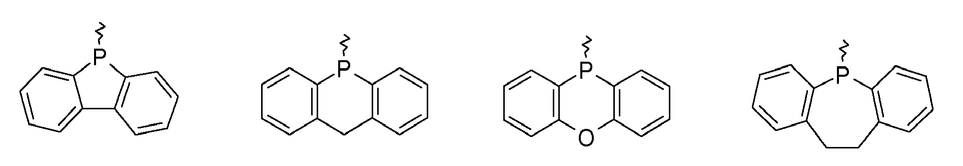 which are unsubstituted or mono- or polysubstituted by C₁-C₈-alkyl, C₄-C₈-cycloalkyl, C₁-C₆-alkoxy, C₁-C₄-alkoxy-C₁-C₄-alkyl, phenyl, C₁-C₄-alkyl- or C₁-C₄-alkoxyphenyl, benzyl, C₁-C₄-alkyl- or C₁-C₄-alkoxybenzyl, benzyloxy, C₁-C₄-alkyl- or C₁-C₄-alkoxybenzyloxy or C₁-C₄-alkylidenedioxy.

In a preferred embodiment of the invention the phosphine group of formula -PR₂R₃ is a noncyclic secondary phosphine group selected from the group consisting of -P(C₁-C₆-alkyl)₂, -P(C₅-C₈-cycloalkyl)₂, -P(C₇-C₈-bicycloalkyl)₂, -P(o-furyl)₂, -P(C₆H₅)₂, -P[2-(C₁-C₆-alkyl)C₆H₄]₂, -P[3-(C₁-C₆-alkyl)C₆H₄]₂, -P[4-(C₁-C₆-alkyl)C₆H₄]₂, -P[2-(C₁-C₆-alkoxy)C₆H₄]₂, -P[3-(C₁-C₆-alkoxy)C₆H₄]₂, -P[4-(C₁-C₆-alkoxy)C₆H₄]₂, -P[2-(trifluoromethyl)C₆H₄]₂, -P[3-(trifluoromethyl)C₆H₄]₂, -P[4-(trifluoromethyl)C₆H₄]₂, -P[3,5-bis(trifluoromethyl)C₆H₃]₂, -P[3,5-bis(C₁-C₆-alkyl)₂C₆H₃]₂, -P[3,5-bis(C₁-C₆-alkoxy)₂C₆H₃]₂ and -P[3,5-bis(C₁-C₆-alkyl)₂-4-(C₁-C₆-alkoxy)C₆H₂]₂, or a cyclic phosphine selected from the group of 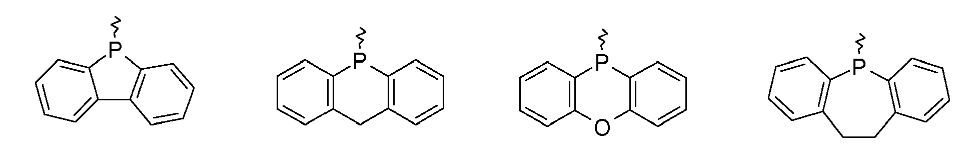 which are unsubstituted or mono- or polysubstituted by C₁-C₄-alkyl, C₁-C₄-alkoxy, C₁-C₄-alkoxy-C₁-C₂-alkyl, phenyl, benzyl, benzyloxy or C₁-C₄-alkylidenedioxy.

Some specific examples of noncyclic secondary phosphine groups are -P(CH₃)₂, -P(C₂H₅)₂,-P(i-C₃H₇)₂, -P(n-C₄H₉)_{2,} -P(i-C₄H₉)_{2,} -P(t-C₄H₉)_{2,} -P(C₅H₉)₂, -P(C₆H₁₁)₂, -P(norbornyl)₂, -P(o-furyl)₂, -P(C₆H₅)₂, -P[2-(methyl)C₆H₄]₂, -P[3-(methyl)C₆H₄]₂, -P[4-(methyl)C₆H₄]₂, -P[2-(methoxy)C₆H₄]₂, -P[3-(methoxy)C₆H₄]₂, -P[4-(methoxy)C₆H₄]₂, -P[3-(trifluoromethyl)C₆H₄]₂, -P[4-(trifluoromethyl)C₆H₄]₂, -P[3,5-bis(trifluoromethyl)C₆H₃]₂, P[3,5-bis(methyl)₂C₆H₃]₂, -P[3,5-bis(methoxy)₂C₆H₃]₂ and -P[3,5-bis(methyl)₂-4-(methoxy)CsH₂]₂.

The invention secondly provides a process for the preparation of compounds of the formula (1), which are optically pure or highly optically enriched, which includes the following steps:
(a) reaction of an acid chloride of formula (2) 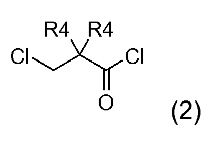 wherein R₄ is as defined above
   with a chiral aminoalcohol of formula (3) 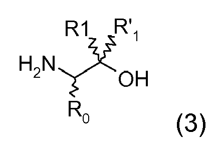 wherein R₁, R'₁ and R₀ are as defined above,
   to form the chiral amide of formula (4) 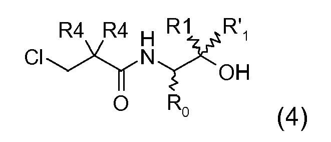
(b) cyclization of the chiral amide of formula (4) to a corresponding chiral oxazoline alkylene chloride of formula (5) 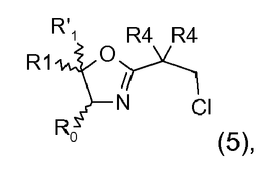 and
(c) reaction of the chiral oxazoline alkylene chloride of formula (5) with a metal phosphide of the formula M'-PR₂R₃ where M' is K, Na, or Li, and R₂ and R₃ are as defined above,
to give the chiral compounds of formula (1)), which are optically pure or highly optically enriched.

Step (a) is performed according to methods well known in the art for reacting acid chlorides with amino alcohols.

Usually one molar equivalent of an acid chloride of formula (2) is reacted with one molar equivalent of an amino alcohol of formula (3) in an organic solvent in presence of a base, such as notably a tertiary amine, e.g. triethylamine, di-isoproypylethylamine, N,N-dimethylaniline and pyridine, in particular triethylamine.

The organic solvent may be protic or aprotic. Preferably it is aprotic. Examples of suitable aprotic solvents are methylene chloride, and ethers such as diethyl ether TBME and THF.

The reaction is usually conducted at a temperature between 0 and 100°C, preferably between 10 and 50°C.

In step (b) the amide of formula (4) obtained after performing step (a) is cyclized to a corresponding oxazoline of formula (5) using known reagents and methods (see e.g Thomas G. Gant et al. 1994 Tetrahedron, 50, 8, 2297-2360 and Björn T. Hahn et al., 2008, 85, 267-277).

A suitable method is for instance one using the Burgess reagent. The amide of formula (4) and a molar excess of the Burgess reagent are refluxed in an aprotic solvent, suitably one having a boiling point between 50 and 100 °C, in particular between 60 and 80 °C, such as THF.

Another suitable method comprises reacting the amide of formula (4) and methanesulfonyl chloride in an aprotic solvent in presence of a base, such as notably a tertiary amine, e.g. triethylamine, di-isoproypylethylamine, N,N-dimethylaniline and pyridine, in particular triethylamine.

In step (c) the chloride function in the oxazoline alkylene chloride of formula (5) is reacted with the metal phosphide M'-PR₂R₃-. to give the final compound of formula (1). In this reaction the chloride is exchanged against the phosphine group PR₂R₃.

It is generally known that neopentyl-type halides, and especially neopentyl-type chlorides, are very little reactive in nucleophilic substitution reactions (see e.g. J. Clayden et al. Organic chemistry ISBN 0198503466 (2001), pages 978-979). There is no previous report of a reaction of a metalphosphide with a molecule that contains an oxazoline function together with a neopentyl-type chloride function. It was surprisingly found that the reaction proceeds cleanly and with high selectivity at the neopentyl-type function, even at high temperatures.

The preparation of metal phosphides of type M'-PR₂R₃ is generally known: some are commercially available, e.g. KPPh₂ and LiPPh₂; the metal phosphides can be prepared in an inert solvent by reaction of the secondary phosphines HPR₂R₃ with a strong base such as KH, alkyl or aryl lithium like phenyl lithium, n-butyl lithium, s-butyl-lithium or t-butyl lithium, or t-BuOK. Alternatively metal phosphides can also be obtained by reaction of tertiary arylphosphines or of monochlorophosphines with elemental lithium, sodium or potassium and alloys of these alkali metals. Conditions are described in the literature.

Step (c) may comprise reacting oxazoline alkylene chloride of formula (5) with a metal phosphide of formula M'PR₂R₃ in an inert solvent at a temperature between 50 and 80°C.

A preferred method for performing step (c) comprises mixing a secondary diarylphosphine with an equimolar amount of KH and then adding a solution of the oxazoline alkylene chloride: preferred solvents for this reaction are ethers such as THF, dioxane, TBME, diethylether, dimethoxyethane; the addition of the oxazoline alkylidene chloride of formula (5) is preferably performed at a temperature between 0 and 30 °C. The reaction is then usually conducted at temperature from 25 to 100°C, preferably from 40 to 70 °C for a period of time of 1 to 48 hours, preferably 3 to 10 hours.

### Metal complexes

The inventive compounds of the formula I are ligands for metal complexes selected from the group of the transition metals, which are outstanding catalysts or catalyst precursors for asymmetric syntheses, for example the asymmetric hydrogenation of prochiral, unsaturated, organic compounds. When prochiral, unsaturated, organic compounds are used, a very high excess of optical isomers can be induced in the synthesis of organic compounds and a high chemical conversion can be achieved. In addition, such ligands may also be used in other asymmetric addition or cyclization reactions.

The invention further provides metal complexes of transition metals of the transition groups of the Periodic Table of the Elements with a compound of the formula I as ligands, where the equivalents ratio of ligand to metal is preferably about 2.2 : 1 to 0.9 : 1 and more preferably 1.1 : 1 to 0.9 : 1. Especially preferably, the equivalents ratio is around 1.1 : 1 to 1 : 1.

Among the transition metals, particular preference is given to metals selected from the group of Fe, Co, Ni, Cu, Ag, Au, Ru, Rh, Pd, Os, Ir. Very particularly preferred metals are Cu, Pd, Ru, Rh, Ir and Pt. Examples of organic syntheses are, as well as asymmetric hydrogenations of prochiral, unsaturated, organic compounds, amine couplings, enantioselective ring openings and hydrosilylations.

Particularly preferred metals are iridium, ruthenium and rhodium.

According to the oxidation number and coordination number of the metal atom, the metal complexes may contain further ligands and/or anions. They may also be cationic metal complexes. Such analogous metal complexes and their preparation have been described many times in the literature.

The metal complexes may, for example, correspond to the general formulae V and VI

A₁MeLₙ (V) (A₁MeLₙ)^{(z+)}(E⁻)_{z} (VI)

in which A₁ is a compound of the formula I,
L represents identical or different monodentate, anionic or nonionic ligands, or two L represent identical or different bidentate, anionic or nonionic ligands;
n is 2, 3 or 4 when L is a monodentate ligand, or n is 1 or 2 when L is a bidentate ligand;
z is 1, 2 or 3;
Me is a metal selected from the group of Rh, Ir and Ru; where the metal has the oxidation states of 0, 1, 2, 3 or 4;
E- is the anion of an oxygen acid or complex acid; and
the anionic ligands balance the charge of the 1, 2, 3 or 4 oxidation states of the metal.

For the compounds of the formulae I, the preferences and embodiments described above apply.

Monodentate nonionic ligands may, for example, be selected from the group of the olefins (for example ethylene, propylene), allyls (allyl, 2-methallyl), solvating solvents (nitriles, linear or cyclic ethers, optionally N-alkylated amides and lactams, amines, phosphines, alcohols, carboxylic esters, sulphonic esters), nitrogen monoxide and carbon monoxide.

Monodentate anionic ligands may, for example, be selected from the group of halide (F, Cl, Br, I), pseudohalide (cyanide, cyanate, isocyanate) and anions of carboxylic acids, sulphonic acids and phosphonic acids (carbonate, formate, acetate, propionate, methylsulphonate, trifluoromethylsulphonate, phenylsulphonate, tosylate).

Bidentate nonionic ligands may, for example, be selected from the group of the linear and cyclic diolefins (for example hexadiene, cyclooctadiene, norbornadiene), dinitriles (malonitrile), optionally N-alkylated dicarboxamides, diamines, diphosphines, diols, acetonylacetonates, dicarboxylic diesters and disulphonic diesters.

Bidentate anionic ligands may, for example, be selected from the group of the anions of dicarboxylic acids, disulphonic acids and diphosphonic acids (for example from oxalic acid, malonic acid, succinic acid, maleic acid, methylenedisulphonic acid and methylenediphosphonic acid).

Preferred metal complexes are also those in which E- represents anions of oxygen acids selected from the group of ClO₄⁻, CF₃SO₃⁻, CH₃SO₃⁻, HSO₄⁻, and anions of complex acids selected from the group of tetraarylborates, for example B(phenyl)₄⁻, B[bis(3,5-trifluoromethyl)phenyl]₄⁻, B[bis(3,5-dimethyl)phenyl]₄⁻, B(C₆F₅)₄⁻ and B(4-methylphenyl)₄⁻, and BF₄⁻, PF₆⁻, SbCl₆⁻, AsF₆⁻ or SbF₆⁻. Other suitable anions E⁻ are -Cl⁻, -Br⁻, -I⁻, (CF₃SO₂)₂N⁻ and (CF₃SO₂)₃C⁻.

Especially preferred metal complexes which are particularly suitable for hydrogenations correspond to the formulae VII and VIII

[A₁Me₂YZ] (VII) [A₁Me₂Y]⁺E₁⁻ (VIII)

in which
A₁ is a compound of the formula I;
Me₂ is rhodium or iridium;
Y represents two olefins or one diene;
Z is Cl, Br or I; and
E₁⁻ is the anion of an oxygen acid or complex acid.

For the compounds of the formulae I, the preferences and embodiments described above apply.

When Y is defined as olefin, it may be C₂-C₁₂-, preferably C₂-C₆- and more preferably C₂-C₄-olefins. Examples are propene, but-1-ene and particularly ethylene. The diene may contain 5 to 12 and preferably 5 to 8 carbon atoms, and the dienes may be open-chain, cyclic or polycyclic dienes. The two olefin groups of the diene are preferably connected by one or two CH₂ groups. Examples are 1,3-pentadiene, cyclopentadiene, 1,5-hexadiene, 1,4-cyclohexadiene, 1,4- or 1,5-heptadiene, 1,4- or 1,5-cycloheptadiene, 1,4- or 1,5-octadiene, 1,4- or 1,5-cyclooctadiene and norbornadiene. Y preferably represents two ethylene or 1,5-hexadiene, 1,5-cyclooctadiene or norbornadiene.

In formula VIII, Z is preferably Cl or Br. Examples of E₁⁻ are BF₄⁻, ClO₄⁻, CF₃SO₃⁻, CH₃SO₃⁻, HSO₄⁻, B(phenyl)₄⁻, B[bis(3,5-trifluoromethyl)phenyl]₄⁻, PF₆⁻, SbCl₆⁻, AsF₆⁻ or SbF₆⁻.

The inventive metal complexes are prepared by methods known in the literature (see also US-A-5,371,256, US-A-5,446,844, US-A-5,583,241, and E. Jacobsen, A. Pfaltz, H. Yamamoto (Eds.), Comprehensive Asymmetric Catalysis I to III, Springer Verlag, Berlin, 1999, and literature cited therein).

### Use of the metal complexes

The inventive metal complexes are homogeneous catalysts or catalyst precursors activable under the reaction conditions, which can be used for asymmetric catalytic reactions such as asymmetric addition reactions onto prochiral, unsaturated, organic compounds like e.g. asymmetric hydrogenation, hydroboration or hydrosilylation; see E. Jacobsen, A. Pfaltz, H. Yamamoto (Eds.), Comprehensive Asymmetric Catalysis I to III, Springer Verlag, Berlin, 1999, and B. Cornils et al., in Applied Homogeneous Catalysis with Organometallic Compounds, Volume 1, Second Edition, Wiley VCH-Verlag (2002). Further applications are, for example, asymmetric allylic alkylation, the amination of aromatics or heteroaromatics which contain leaving groups, for example halide or sulphonate, with primary or secondary amines using palladium complexes, or the preferably Rh-catalysed enantioselective ring-opening reaction of oxabicyclic alkanes (M. Lautens et al. in Acc. Chem. Res. Volume 36 (203), pages 48-58.

The metal complexes can, for example, be used for asymmetric hydrogenation (addition of hydrogen) of prochiral compounds with carbon/carbon or carbon/heteroatom double bonds. Such hydrogenations with soluble homogeneous metal complexes are described, for example, in Pure and Appl. Chem., Vol. 68, No. 1, pp. 131-138 (1996). Preferred unsaturated compounds for hydrogenation contain C=C (prochiral alkenes), C=N (prochiral ketimines), C=N-N (prochiral ketohydrazones), C=N-O (prochiral ketoximes) and/or C=O (prochiral ketones) groups. For the hydrogenation, according to the invention, preference is given to using metal complexes of ruthenium, rhodium and iridium.

The invention further provides for the use of the inventive metal complexes as homogeneous catalysts for preparing chiral organic compounds by asymmetric addition of hydrogen onto a carbon- or carbon-heteroatom double bond in prochiral organic compounds.

A further aspect of the invention is a process for preparing chiral organic compounds by asymmetric addition of hydrogen onto a carbon or carbon-heteroatom double bond in prochiral organic compounds in the presence of a catalyst, **characterized in that** the addition is carried out in the presence of catalytic amounts of at least one inventive metal complex.

Preferred prochiral, unsaturated compounds for hydrogenation may contain one or more, identical or different C=C, C=N and/or C=O groups, in open-chain or cyclic organic compounds, where the C=C, C=N and/or C=O groups may be part of a ring system or are exocyclic groups. The prochiral unsaturated compounds may be alkenes, cycloalkenes, heterocycloalkenes, and open-chain or cyclic ketones, α,β-diketones, α- or β-ketocarboxylic acids, and the α,β-keto acetals or ketals thereof, esters and amides, ketimines, ketoximes and kethydrazones. Alkenes, cycloalkenes, heterocycloalkenes also include enamides.

The process according to the invention can be carried out at low or elevated temperatures, for example temperatures of -20 to 150°C, preferably of -10 to 100°C, and more preferably of 10 to 80°C. The optical yields are generally better at lower temperature than at higher temperatures.

The process according to the invention can be carried out at standard pressure or elevated pressure. The pressure may, for example, be 10⁵ to 2x10⁷ Pa (pascals). Hydrogenations can be carried out at standard pressure or elevated pressure.

Catalysts are preferably used in amounts of 0.00001 to 10 mol%, more preferably 0.00001 to 5 mol%, and especially preferably 0,00001 to 2 mol%, based on the compound to be hydrogenated.

The preparation of the ligands and catalysts and the hydrogenation can be carried out without or in the presence of an inert solvent, it being possible to use one solvent or mixtures of solvents. Suitable solvents are, for example, aliphatic, cycloaliphatic and aromatic hydrocarbons (pentane, hexane, petroleum ether, cyclohexane, methylcyclohexane, benzene, toluene, xylene), aliphatic halohydrocarbons (methylene chloride, chloroform, di- and tetrachloroethane), nitriles (acetonitrile, propionitrile, benzonitrile), ethers (diethyl ether, dibutyl ether, t-butyl methyl ether, ethylene glycol dimethyl ether, ethylene glycol diethyl ether, diethylene glycol dimethyl ether, tetrahydrofuran, dioxane, diethylene glycol monomethyl or monoethyl ether), ketones (acetone, methyl isobutyl ketone), carboxylic esters and lactones (ethyl or methyl acetate, valerolactone), N-substituted lactams (N-methylpyrrolidone), carboxamides (dimethylacetamide, dimethylformamide), acyclic ureas (dimethylimidazoline), and sulphoxides and sulphones (dimethyl sulphoxide, dimethyl sulphone, tetramethylene sulphoxide, tetramethylene sulphone) and optionally fluorinated alcohols (methanol, ethanol, propanol, butanol, ethylene glycol monomethyl ether, ethylene glycol monoethyl ether, diethylene glycol monomethyl ether, 1,1,1-trifluoroethanol) and water. Suitable solvents are also low molecular weight carboxylic acids, for example acetic acid.

The reactions can be carried out in the presence of cocatalysts, for example quaternary ammonium halides (tetrabutylammonium chloride, bromide or iodide) or protic acids, for example mineral acids such as HC! or strong organic acids such as trifluoroacetic acid, or mixtures of such halides and acids (see for example US-A-5,371,256, US-A-5,446,844 and US-A-5,583,241 and EP-A-0 691 949). The presence of fluorinated alcohols, for example 1,1,1-trifluoroethanol, can also promote the catalytic reaction. The addition of bases, for example tertiary amines or phosphines, alkali metal hydroxides, secondary amides, alkoxides, carbonates and hydrogencarbonates may also be advantageous. The selection of a cocatalyst may be guided principally by the metal in the metal complex and the substrate. In the hydrogenation of prochiral aryl ketimines, the use of iridium complexes in combination with tetra-C₁-C₄-alkylammonium iodides and mineral acids, preferably HI, has been found to be useful.

The metal complexes used as catalysts can be added as separately prepared isolated compounds, or else be formed in situ before the reaction and then mixed with the substrate to be hydrogenated. It may be advantageous to additionally add ligands in the case of reaction using isolated metal complexes, or to use an excess of the ligands in the case of in situ preparation. The excess may, for example, be 1 to 6 and preferably 1 to 2 mol, based on the metal compound used for the preparation.

The process according to the invention is generally carried out by initially charging the catalyst and then adding the substrate, optionally reaction assistants and the compound to be added on, and then starting the reaction. Gaseous compounds to be added on, for example hydrogen, are preferably injected. The process can be carried out in various reactor types, continuously or batchwise.

The chiral organic compounds preparable in accordance with the invention are active substances or intermediates for preparing such substances, especially in the sector of production of aromas and odorants, pharmaceuticals and agrochemicals.

The examples which follow illustrate the invention. All reactions are carried out under argon with exclusion of air and with degassed solvents. The yields are not optimized.

3-chloropivaloyl chloride is commercially available. 3-Chloro-2,2-diphenyl-propionic acid was prepared according to J. Amer. Chem. Soc. 72 (1950) 3004.

### A) Preparation of the intermediates

### 1) Preparation of amides of formula (4)

### Example A1: Preparation of amide A1

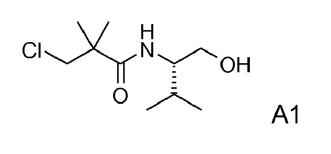

L-valinol (1.00 g, 9.68 mmol, 1.00 eq) and triethylamine (4.60 mL, 32.4 mmol, 3.30 eq) are dissolved in 60 mL of diethyl ether. To this mixture a solution of the 3-chloropivaloyl chloride (1.50 g, 9.68 mmol, 1.00 eq) in 10 mL of diethyl ether is added dropwise at 0 °C, leading to a precipitation of NEt₃.HCl. After addition of the acid chloride the solution is stirred for 75 minutes at room temperature. A saturated NaHCO₃ solution (50 mL) is added and the phases are separated. The aqueous phase is extracted three times with 50 mL of diethyl ether. The combined organic phases are washed with brine (50 mL), dried over MgSO₄ and concentrated on a rotary evaporator leaving a brown oil. Distillation under reduced pressure affords the compound A1 as a colorless solid. The solid is dissolved in CH₂Cl₂ (5 mL) and added dropwise to 150 mL of ice-cold pentane. The colorless precipitate is collected by filtration. After drying, 1.65 g (7.44 mmol, 77%) of amide A1 are obtained.
¹H-NMR (400.1 MHz, CDCl₃, 300 K): δ = 5.95 (s, 1H, N*H*), 3.75-3.63 (m, 4H, C*H*₂Cl, CH, C*H*₂OH), 2.54 (s, 1H, O*H*), 1.97-1.85 (m, 1H, C*H*(CH₃)₂), 1.31 (s, 6H, C(C*H*₃)₂), 0.97 (d, *J* = 6.8 Hz, 3H, CH(C*H*₃)₂), 0.94 (d, *J* = 6.8 Hz, 3H, CH(C*H*₃)₂).
[α]_{D}²⁰: -33.5 (c = 1.0, CHCl₃).

### Example A2: Preparation of amide A2

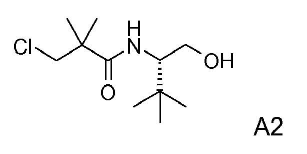

L-tert.-leucinol (3.00 g, 25.6 mmol, 1.00 eq) and triethylamine (8.55 g, 84.5 mmol, 3.30 eq) are dissolved in 150 mL of diethyl ether. To this mixture a solution of 3-chloropivaloyl chloride (3.97 g, 25.6 mmol, 1.00 eq) in 15 mL of diethyl ether is added dropwise at 0 °C, leading to a precipitation of NEt₃.HCl. After addition of the acid chloride the solution is stirred for two days at room temperature. A saturated NaHCO₃ solution (50 mL) is added and the phases are separated. The aqueous phase is extracted with diethyl ether. The combined organic phases are washed with brine (50 mL), dried over MgSO₄ and concentrated on a rotary evaporator leaving a colorless solid amide A2 (5.13 g, 21.8 mmol, 85%), which needs no further purification.
¹H-NMR (400.1 MHz, CDCl₃, 300 K): δ = 5.95 (d, J = 5.8 Hz, 1H, NH), 3.82-3.88 (m, 2H), 3.64 (s, 2H, CH₂Cl), 3.55-3.61 (m, 1H), 2.38 (dd, J = 5.0 Hz, J = 6.1 Hz, 1H, OH), 1.33 (s, 6H, C(CH₃)₂), 0.97 (s, 9H, C(CH₃)₃).
[α]_{D}²⁰: -11.7 (c = 0.99, CHCl₃).

### Example A3: Preparation of amide A3

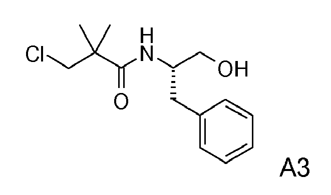

L-phenylalaninol (2.44 g, 16.1 mmol, 1.00 eq) is suspended in 90 mL of diethyl ether. Triethylamine (7.60 mL, 54.0 mmol, 3.30 eq) dissolved in 20 mL of dichloromethane is added in one portion. To this mixture a solution of the 3-chloropivaloyl (2.50 g, 16.1 mmol, 1.00 eq) in 10 mL of diethyl ether is added dropwise at 0 °C, leading to a precipitation of NEt3.HCl. After addition of the acid chloride the solution is stirred for 75 minutes at room temperature. A saturated NaHCO₃ solution (50 mL) is added and the phases are separated. The aqueous phase is extracted three times with 50 mL of diethyl ether. The combined organic phases are washed with brine (50 mL), dried over MgSO₄ and concentrated on a rotary evaporator leaving a brown oil. Distillation under reduced pressure affords the amide A3 compound as a yellow oil (4.31 g, 16.0 mmol, 99%), which solidifies in the fridge.
¹H-NMR (400.1 MHz, CDCl₃, 300 K): δ = 7.33-7.21 (m, 5H, *H*_{Ar}), 5.96 (m, 1H, N*H*), 4.22-4.15 (m, 1H, CH), 3.70-3.51 (m, 4H, CH₂Cl, CH₂OH), 2.96-2.83 (m, 2H, C₆H₅CH₂), 2.69 (s, 1H, OH), 1.22 (s, 3H, CH₃), 1.17 (s, 3H, CH₃).
[α]_{D}²⁰: -12.8 (c = 0.99, CHCl₃).

### Example A4: Preparation of amide A4

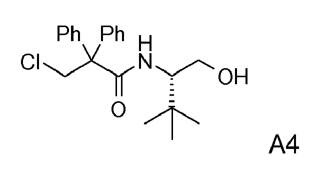

In a 3-neck-round-bottom flask 3-chloro-2,2-diphenyl-propionic acid (5.13 g, 19.7 mmol) and thionyl chloride (15 mL) are heated to reflux for 4 hours. Excess thionyl chloride is removed by distillation and 10 mL of dry benzene are added and distilled off. The acid chloride is used for the amide synthesis without further purification.

L-tert.-leucinol (2.32 g, 19.8 mmol) is dissolved in 75 mL of methylene chloride and 2.76 mL of triethylamine (19.8 mmol) are added. The acid chloride is dissolved in 25 mL of methylene chloride and added dropwise under stirring to the solution of aminoalcohol and triethylamine at 0 °C. The reaction mixture is allowed to warm up to room temperature (30 minutes) and is then heated to reflux for 2 hours. The reaction mixture is allowed to cool to room temperature and the solvent is removed on a rotary evaporator. The product is dissolved in 50 mL of boiling ethyl acetate and the insoluble NEt3.HCl is removed by filtration. The solvent is removed on a rotary evaporator leaving a yellowish oil (6.82 g). The crude product is dissolved in 20 mL of ethyl acetate and 100 mL of pentane. Crystallization is initiated by cooling to -78 °C, leaving the desired product A4 as a colorless solid (5.80 g, yield 82%).
¹H-NMR (400.1 MHz, CDCl₃, 300 K): δ = 7.30-7.46 (m, 10H, H_{Ar}), 5.84 (d, 1H, J = 7.9 Hz, NH), 4.48 (d, 1H, J = 11.6 Hz, CH₂Cl), 4.41 (d, 1H, J = 11.6 Hz, CH₂Cl),3.84 (m, 2H, NCH, CH₂OH), 3.43 (dd, 1H, J = 8.2 Hz, J = 11.3 Hz, CH₂OH), 2.34 (br.s, 1H, OH), 0.75 (s, 9H, C(CH₃)₃).
[α]_{D}²⁰ -7.3 (c 0.54, CHCl₃).

### 2) Preparation of oxazolines of formula (5)

### Example A5: Preparation of oxazoline A5

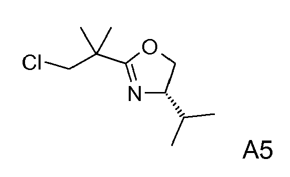

Amide A1 (510 mg, 2.30 mmol, 1.00 eq) and *Burgess'* reagent (714 mg, 2.99 mmol, 1.30 eq) are dissolved in 25 mL of THF. The mixture is heated to reflux for 4 hours. The solvent is removed on a rotary evaporator and the crude product is extracted with diethyl ether . After removal of the diethyl ether on a rotary evaporator the crude product is purified by distillation under reduced pressure. Oxazoline A5 is obtained as a colorless oil (440 mg, 2.16 mmol, 94%).
¹H-NMR (400.1 MHz, CDCl₃, 300 K): δ = 4.23-4.15 (m, 1H, NCH), 4.01-3.92 (m, 2H, OCH₂), 3.61 (s, 2H, CH₂Cl), 1.79 (qd, J = 6.8 Hz, J = 12.1 Hz, 1H, CH(CH₃)₂), 1.30 (s, 6H, C(CH₃)₂), 0.92 (d, J = 6.8 Hz, 3H, CH(CH₃)₂), 0.86 (d, J = 6.8 Hz, 3H, CH(CH₃)₂). [α]_{D}²⁰: -77.4 (c = 1.16, CHCl₃).

### Example A6: Preparation of oxazoline A6

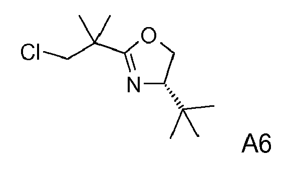

Amide A2 (4.62 g, 19.6 mmol, 1.00 eq) and Burgess' reagent (6.07 mg, 25.5 mmol, 1.30 eq) are dissolved in 200 mL of THF. The mixture is heated to reflux for 4 hours. The solvent is removed on a rotary evaporator. To the crude is added diethyl ether to dissolve the soluble components of the reaction mixture. The diethyl ether containing the product is decanted and the solvent is removed on a rotary evaporator.
Distillation under reduced pressure gives a colorless oil which is filtered over a plug of silica eluting with pentane/ether (10/1). The oxazoline A6 is obtained as a colorless oil (4.18 g, 19.2 mmol, 98%).
¹H-NMR (400.1 MHz, CDCl₃, 300 K): δ = 4.14 (dd, J = 8.6 Hz, J = 10.1 Hz, 1H, NCH), 4.08 (dd, J = 7.2 Hz, J = 8.6 Hz, 1H, OCH₂), 3.83 (dd, J = 7.2 Hz, J = 10.1 Hz, 1H, OCH₂), 3.62 (s, 2H, CH₂Cl), 1.30 (s, 6H, C(CH₃)₂), 0.88 (s, 9H, C(CH₃)₃); [α]_{D}²⁰: -80.5 (c = 1.17, CHCl₃).

### Alternatively, the oxazoline A6 can be prepared without Burgess' reagent:

To a solution of 98.3 mg of the amide A2 (0.42 mmol, 1.00 equiv) in 2 mL of dry dichloromethane and 0.2 mL triethylamine, are added 0.05 mL of methanesulfonyl chloride at 4°C. The reaction mixture is refluxed for 2h and then cooled to room temperature. 2 mL of saturated sodium bicarbonate are added with vigorous stirring. The layers are separated and the aqueous phase extracted with dichloromethane. The combined organic phases are washed with saturated brine (5 mL) and dried over anhydrous Na₂SO₄. Silica gel (2 g) is added and the solvent is distilled off under reduced pressure. Purification by filtration over silica gel (mobile phase= pentane/ethyl acetate, 10:1) affords the oxazoline A6 as colorless oil which has the identical properties as the oxazoline prepared with the *Burgess'* reagent.

### Example A7: Preparation of oxazoline A7

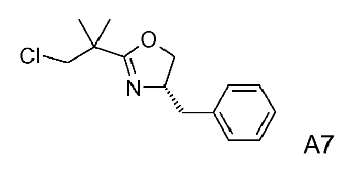

Amide A3 (1.01 g, 3.76 mmol, 1.00 eq) and Burgess' reagent (1.21 g, 5.05 mmol, 1.30 eq) are dissolved in 40 mL of THF. The mixture is heated to reflux for 4 hours. The solvent is removed on a rotary evaporator and the crude product is dissolved in 20 mL of CH₂Cl₂. After extraction with water) and brine the organic phase is dried over MgSO₄. After removal of the solvent on a rotary evaporator the crude product is purified by distillation under reduced pressure. The oxazoline A7 compound is obtained as a colorless oil (679 mg, 2.70 mmol, yield 72%).
¹H-NMR (400.1 MHz, CDCl₃, 300 K): δ = 7.27-7.31 (m, 2H, H_{Ar}), 7.19-7.24 (m, 3H, H_{Ar}), 4.39 (dddd, 1H, J = 4.8 Hz, J = 6.8 Hz, J = 8.7 Hz J = 8.9 Hz, NCH), 4.16 (dd, 1H, J = 8.4 Hz, J = 8.9 Hz, OCH₂), 4.00 (dd, 1H, J = 6.8 Hz, J = 8.4 Hz, OCH₂), 3.59 (s, 2H, ClCH₂), 3.09 (dd, 1H, J = 4.7 Hz, J = 13.7 Hz, CH₂C₆H₅), 2.65 (dd, 1H, J = 8.6 Hz, J = 13.7 Hz, CH₂C₆H₅), 1.28 (s, 3H, C(CH₃)₂), 1.27 (s, 3H, C(CH₃)₂).
[α]_{D}²⁰: -29.7 (c = 1.00, CHCl₃).

### Example A8: Preparation of oxazoline A8

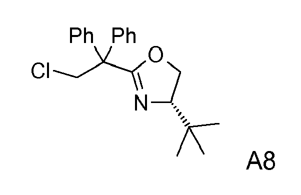

In a 3-neck-round-bottom flask the amide A4 (4.00 g, 11.1 mmol) is dissolved in 55 mL of dry methylene chloride and 3.72 mL (26.6 mmol) of triethylamine are added. The solution is cooled to 0 °C and 1.0 mL of mesyl chloride is added dropwise. The solution is allowed to warm up to room temperature and is then heated to reflux for 4 hours. The solution is allowed to cool to room temperature and 20 mL of a NaHC0₃ solution are added with stirring for 5 minutes. The phases are separated and the aqueous phase is washed 2 times with CH₂Cl₂. The combined organic phases are washed with brine and dried over MgSO₄. The solvent is removed at a rotary evaporator and 5 mL of ethyl acetate are added, followed by 100 mL of pentane. The solution is cooled to -78 °C and filtered. The colorless filtrate is concentrated giving 3.14 g (9.18 mmol, yield 83%) of the desired product as a colorless oil.
¹³C{¹H}-NMR (100.6 MHz, CDCl₃, 300 K): δ = 167.2 (OC=N), 140.4 (C_{Ar}), 140.2 (C_{Ar}), 129.2 (H*C*_{Ar}), 129.1 (HC_{Ar}), 127.8 (H*C*_{Ar}), 127.8 (H*C*_{Ar}), 75.6 (N*C*H), 68.7 (O*C*H₂), 55.7 (C(C₆H₅)₂), 50.8 (ClCH₂), 33.9 (C(CH₃)₃), 25.9 (C(CH₃)₃);
[α]_{D}²⁰ -58.6 (*c* 1.27, CHCl₃).

### B) Preparation of the ligands

### Example B1: Preparation of ligand B1

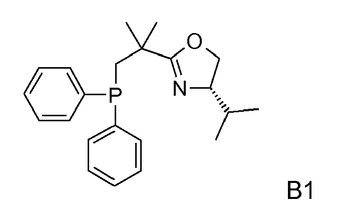

To oxazoline A5 (392 mg, 1.92 mmol, 1.05 eq) 3.65 mL of a 0.5 M solution of KPPh₂ in THF (1.00 eq, 1.83 mmol) is added. Under stirring the red solution is heated to reflux for fourteen hours giving a colorless suspension. The solvent is removed *in vacuo* and 25 mL TBME (t-butyl methyl ether) and 15 mL of a saturated NH₄CI solution are added. The phases are separated, the aqueous phase is diluted with 2 mL of water and extracted with TBME. The combined organic phases are washed with brine and dried over Na₂SO₄. The solvent is removed on a rotary evaporator. After flash chromatography (silica gel, eluent= pentane/ethylacetate, 5/1, ligand B1 is obtained as a colorless oil (595 mg, 1.68 mmol, yield 92%).
¹H-NMR (400.1 MHz, CDCl₃, 300 K): δ = 7.43-7.48 (m, 4H, H_{Ar}), 7.28-7.34 (m, 6H, H_{Ar}), 3.68-3.78 (m, 3H, OCH₂, NCH), 2.44 (dq, 2H, J = 3.5 Hz, J = 14.3 Hz, PCH₂), 1.64-1.74 (m, 1H, HC(CH₃)₂), 1.34 (s, 3H, C(CH₃)₂), 1.30 (s, 3H, C(CH₃)₂), 0.89 (d, 3H, J = 6.8 Hz, HC(CH₃)₂), 0.80 (d, 3H, J = 6.8 Hz, HC(CH₃)₂).
³¹P{¹H}-NMR (162.0 MHz, CDCl₃, 300 K): δ = -26.2.
[α]²⁰_{D}: -27.5 (c = 1.01, CHCl₃).

### Example B2: Preparation of ligand B2

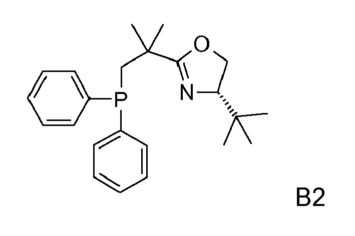

To oxazoline A6 (795 mg, 3.65 mmol) 7.5 mL of a 0.5 M solution of KPPh₂ in THF (1.03 eq, 3.75 mmol) is added. Under stirring the red solution is heated to reflux for seven hours. To the then pale red solution are added 10 mL of a saturated NH₄Cl-solution. This mixture is extracted with TBME, the combined organic phases are washed with brine and dried over Na₂SO₄. The solvent is removed on a rotary evaporator. Flash chromatography (silica gel, eluent= pentane/ethylacetate, 5/1) yields the desired pure product was as a colorless solid (807 mg, 2.20 mmol, yield 60%).
¹H-NMR (400.1 MHz, CDCl₃, 300 K): δ = 7.44-7.48 (m, 4H, H_{Ar}), 7.28-7.34 (m, 6H, H_{Ar}), 3.92 (dd, 1H, J = 6.6 Hz, J = 8.0 Hz, NCH), 3.73 (dd, 1H, J = 8.0 Hz, J = 10.0 Hz, OCH₂), 3.66 (dd, 1H, J = 6.6 Hz, J = 10.0 Hz, OCH₂), 2.50 (dd, 1H, J = 3.9 Hz, J = 14.3 Hz, PCH₂), 2.42 (dd, 1H, J = 3.5 Hz, J = 14.3 Hz, PCH₂), 1.34 (s, 3H, C(CH₃)₂), 1.29 (s, 3H, C(CH₃)₂), 0.85 (s, 9H, C(CH₃)₃).
³¹P{¹H}-NMR (162.0 MHz, CDCl₃, 300 K): δ = -25.9.
[α]*²⁰_{D}*: -33.7 (c = 1.02, CHCl₃).

### Example B3: Preparation of ligand B3

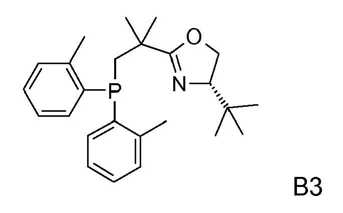

In a reaction vessel, under inert gas, 221 mg (o-Tolyl)₂PH (1.03 mmol) are added, followed by 81.0 mg (2.02 mmol) of KH. Then, the oxazoline A6 (240 mg, 1.10 mmol) and 2 mL of THF are added. Under stirring the red-orange solution is heated to reflux for four hours. An ³¹P-NMR spectrum in C₆D₆ shows full conversion. 4 mL of TBME and 4 mL of a saturated NH₄Cl-solution are added. The phases are separated and the aqueous phase is diluted with 2 mL of water. The aqueous phase is then extracted with TBME, the combined organic phases, washed with brine (10 mL) and dried over Na₂SO₄. To the organic phase is added silica gel (3 g) and the solvent is removed on a rotary evaporator. After flash chromatography (silica gel, eluent = pentane/ethylacetate, 50/1 →25/1) the desired product is obtained as a colorless oil (352 mg, 0.89 mmol, 86%).
¹H-NMR (500.1 MHz, CDCl₃, 300 K): δ = 7.33-7.35 (m, 1H, H_{Ar}), 7.24-7.26 (m, 1H, H_{Ar}), 7.11-7.21 (m, 6H, H_{Ar}), 3.87-3.92 (dd, 1H, J = 12.1 Hz, J = 13.6 Hz, AB spin system, OCH₂), 3.60-3.65 (m, 2H, NCH, OCH₂), 2.53 (s, 3H, CarCH₃), 2.41 (s, 3H, C_{Ar}CH₃), 2.39 (dd, 1H, J = 2.4 Hz, J = 14.8 Hz, PCH₂), 2.34 (dd, 1H, J = 1.6 Hz, J = 14.5 Hz, PCH₂), 1.40 (s, 3H, C(CH₃)₂), 1.33 (s, 3H, C(CH₃)₂), 0.85 (s, 9H, C(CH₃)₃); ³¹P-NMR (162.0 MHz, CDCl₃, 300 K): δ = -54.0;
[α]²⁰_{D}: -28.0 (c = 0.61, CHCl₃).

### Example B4: Preparation of ligand B4

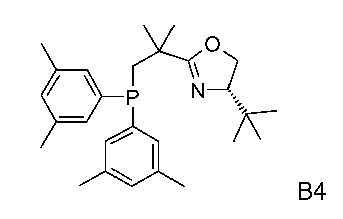

In a reaction vessel, under inert gas, 250 mg Xyl₂PH (1.03 mmol) are added, followed by 81.0 mg (2.02 mmol) of KH. Then, oxazoline A6 (240 mg, 1.10 mmol) and 2 mL of THF are added. Under stirring the orange solution is heated to reflux for six hours. The solvent is removed *in vacuo* and 10 mL of TBME followed by 5 mL of a saturated NH₄Cl-solution are added. The phases are separated and the aqueous phase is diluted with 2 mL of water. The aqueous phase is then extracted with TBME, the combined organic phases washed with brine (10 mL) and dried over Na₂SO₄. To the organic phase is added silica gel (3 g) and the solvent is removed on a rotary evaporator. After flash chromatography (silica gel, eluent= entane/ethylacetate, 5/1) the desired product is obtained as a colorless oil (360 mg, 0.85 mmol, yield 83%).
¹H-NMR (400.1 MHz, CDCl₃, 300 K): δ = 7.09 (s, 2H, H_{Ar}), 7.07 (s, 2H, H_{Ar}), 6.91 (s, 2H, H_{Ar}), 3.93 (dd, 1H, J = 6.8 Hz, J = 8.2 Hz, NCH), 3.75 (dd, 1H, J = 8.2 Hz, J = 10.0 Hz, OCH₂), 3.67 (dd, 1H, J = 6.8 Hz, J = 10.0 Hz, OCH₂), 2.42 (ddd, 2H, J = 3.7 Hz, J = 14.3 Hz, J = 33.6 Hz, PCH₂), 2.28 (s, 12H, CH₃C_{Ar}), 1.33 (s, 3H, C(CH₃)₂), 1.29 (s, 3H, C(CH₃)₂), 0.86 (s, 9H, C(CH₃)₃);
³¹P{¹H}-NMR (162.0 MHz, CDCl₃, 300 K): δ = -26.5;
[α]²⁰_{D}: -29.0 (c = 0.95, CHCl₃).

### Example B5: Preparation of ligand B5

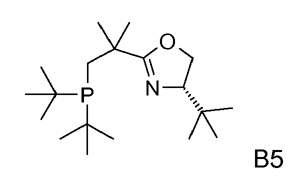

To a solution of di-tert.-butylphosphine (101.7 mg, 0.70 mmol) in 1 mL of THF, is added, at -78 °C, 1.1 eq n-BuLi (1.6 M in hexane, about 0.44 mL). Then the cooling bath is removed and the mixture stirred for one hour at room temperature. The solution of the lithiated phosphine is cooled to -78 °C and added dropwise via cannula to a solution of oxazoline A6 (340 mg, 1.56 mmol, 2.23 eq) in 1 mL of THF. The mixture is refluxed and the progress of the reaction monitored by ³¹P-NMR. After 5 hours the solvent is distilled off under reduced pressure. The raw product B5 is used further without purification.
³¹P-NMR (162.0 MHz, C₆D₆, 300 K): δ = 13.2 ppm.

### Example B6: Preparation of ligand B6

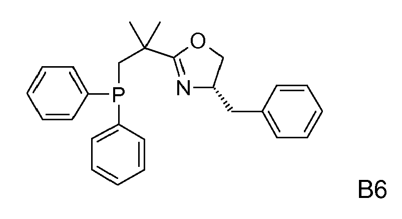

In a reaction vessel, under inert gas, oxazoline A7 (184 mg, 0.73 mmol) is added followed by 1.4 mL of a 0.5 M solution of KPPh₂ in THF (0.96 eq, 0.70 mmol). Under stirring the red solution is heated to reflux for 14 hours. To the then pale yellow solution are added 5 mL of a saturated NH₄Cl-solution. This mixture is extracted with TBME, the combined organic phases are washed with brine (10 mL) and dried over Na₂SO₄. The solvent is removed on a rotary evaporator. After flash chromatography (silica gel, eluent= pentane/ethylacetate, 5/1 to 4/1) the product is obtained as a colorless oil (807 mg, 2.20 mmol, yield 60%).
¹H-NMR (400.1 MHz, CDCl₃, 300 K): δ = 7.43-7.47 (m, 4H, H_{Ar}), 7.12-7.33 (m, 11H, H_{Ar}), 4.15 (ddt, 1H, J = 4.5 Hz, J = 7.6 Hz, J = 8.9 Hz), 3.69 (dd, 2H, J = 3.3 Hz, J = 8.2 Hz), 3.03 (dd, 1H, J = 4.5 Hz, J = 13.7 Hz,), 2.47 (dd, 1H, J = 8.8 Hz, J = 13.7 Hz), 2.41 (dd, 2H, J = 3.3 Hz, J = 5.4 Hz), 1.35 (s, 3H, C(CH₃)₂), 1.28 (s, 3H, C(CH₃)₂).
³¹P{¹H}-NMR (162.0 MHz, CDCl₃, 300 K): δ = -26.7.
[α]*²⁰_{D}*: -16.5 (c = 0.92, CHCl₃).

### Example B7: Preparation of ligand B7

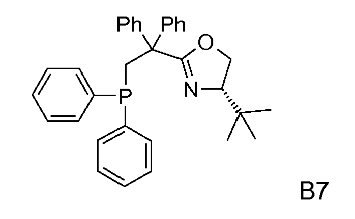

To oxazoline A8 (427 mg, 1.25 mmol) 2.74 mL of a 0.5nn KPPh₂-solution in THF are added and 1.5 mL of dry THF are used for rinsing. The mixture is refluxed for 22 hours. The solution is cooled to 0 °C and a few drops of water are added until the solution becomes colorless. Then 10 mL of a saturated NH₄Cl solution are added, followed by 20 mL of TBME. The phases are separated and the aqueous phase is extracted with TBME. The combined organic phases are washed with brine and dried over Na₂SO₄. Silica gel is added and the solvent is removed on a rotary evaporator. The compound is purified by a filtration over silica gel (eluent= first pentane, then pentane/ ethyl acetate 20/1). The desired product is obtained as a colorless solid (280 mg, 46%).
¹H-NMR (400.1 MHz, CDCl₃, 300 K): δ = 7.27-7.36 (m, 6H, H_{Ar}), 7.14-7.22 (m, 14H, H_{Ar}), 4.16 (dd, 1H, J = 8.9 Hz, J = 10.0 Hz, OCH₂), 4.08 (dd, 1H, J = 8.1 Hz, J = 8.9 Hz, NCH), 3.95 (dd, 1H, J = 8.1 Hz, J = 10.0 Hz, OCH₂), 3.49 (dd, 1H, J = 4.3 Hz, J = 13.8 Hz, PCH₂), 3.35 (dd, 1H, J = 4.8 Hz, J = 13.8 Hz, PCH₂), 0.92 (s, 9H, C(CH₃)₃);
³¹P-NMR (162.0 MHz, CDCl₃, 300 K): δ = -24.2;
[α]_{D}²⁰ -31.5 (c 0.61, CHCl₃).

### Example B8: Preparation of ligand B8

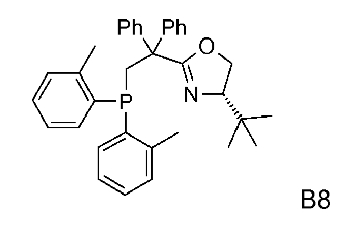

The ligand is synthesized in an analogue way as described for ligand B4 starting from 376 mg (1.10 mmol) of oxazoline A8, 214 mg (1.00 mmol) of *o*Tol₂PH and 80.0 mg of KH. The ligand is obtained as a white solid.
³¹P-NMR (162.0 MHz, CDCl₃, 300 K): δ = -49.3 ppm.

### Example B9: Preparation of ligand B9

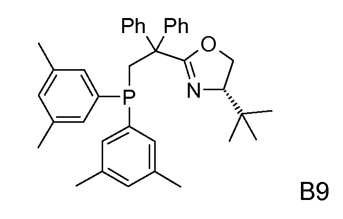

The ligand is synthesized in an analogue way as described for ligand B4 starting from 376 mg (1.10 mmol) of oxazoline A8, 242 mg (1.00 mmol) of Xyl₂PH and 224 mg of KH. The ligand was obtained as a white solid.
³¹P-NMR (162.0 MHz, CDCl₃, 300 K): δ = -24.3 ppm.

### C) Synthesis of Metal Complexes

### Example C1: Preparation of the Iridium complex C1

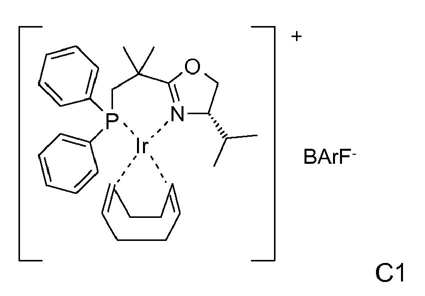

### Method a): Preparation of the Iridium complex C1 starting from oxazoline A5 without isolation of the ligand B1:

To a solution of 211 mg (1.03 mmol, 1.00 eq) oxazoline A5 in 2 mL of THF are added dropwise at 0 °C 2.0 mL of a 0.5 M KPPh₂ solution in THF (1.00 mmol, 0.97 eq). The red solution is heated to reflux for 5 h. The solvent is removed *in vacuo* and to the residue is added toluene (5 mL) and 0.3 mL methanol. The solution is filtered through a plug of silica followed by 5x2 mL of toluene. The solvent is removed *in vacuo* and 386 mg (1.09 mmol, 106%) of the crude ligand B1 are obtained with sufficient purity (judged from the ³¹P-NMR spectrum) for complexation.

To a solution of 208 mg (310 µmol, 0.53 eq) of [Ir(COD)Cl]₂ in 5 mL of CH₂Cl₂ are added 207 mg (586 µmol, 1.0 eq) of the crude ligand B1. The solution is heated to reflux for 30 min and the solution is cooled to room temperature followed by addition of 675 mg (762 µmol, 1.30 eq) of NaBAr_{F} as a solid. After 30 min 20 mL of water are added, the phases are separated and the aqueous phase is washed with CH₂Cl₂. The combined organic phases are dried over MgSO₄, 3 g of silica gel are added and the solvent is removed on a rotovap. The immobilized complex is put on top of a silica gel column and eluted with 300 mL TBME (discarted) followed by 200 mL CH₂Cl₂ (collected). The solvent is removed on a rotovap and the product is dried under vacuum (1×10⁻¹ mbar). The desired Ir-complex is obtained as an orange crystalline solid (644 mg, 425 µmol) in 72% yield.
¹H-NMR (500.1 MHz, CD₂Cl₂, 300 K): δ = 7.87 (dd, 2H, J = 7.6 Hz, J = 11.2 Hz, HC_{Ar}), 7.73 (s, 8H, HC_{ArF-o}), 7.62-7.51 (m, 3H, HC_{Ar}), 7.57 (s, 4H, HC_{ArF-p}), 7.48-7.38 (m, 3H, HC_{Ar}), 7.13-7.08 (m, 2H, HC_{Ar}), 5.00-4.90 (br s, 1H, COD-CH), 4.89-4.76 (m, 1H, COD-CH), 4.44-4.39 (m, 1H, OCH₂), 4.35 (dd, 1H, J = 14.6 Hz, J = 5.1 Hz, OCH₂), 4.09-3.99 (m, 1H, NCH), 3.51 (br.s, 1H, COD-CH), 2.65-2.47 (m, 5H, COD-CH, COD-CH₂, PCH₂), 2.44-2.33 (m, 2H, COD-CH₂), 2.18 (s, 3H, C(CH₃)₂), 2.17-2.10 (m, 1H, COD-CH₂), 2.06-1.97 (m, 1H, CH(CH₃)₂), 1.95-1.86 (m, 1H, COD-CH₂), 1.74-1.60 (m, 1H, COD-CH₂), 1.49 (d, 3H, J = 2.7 Hz, C(CH₃)₂), 1.48-1.42 (m, 1H, COD-CH₂), 0.84 (d, 3H, J = 7.1 Hz, CH(CH₃)₂), 0.06 (d, 3H, J = 6.7Hz, CH(CH₃)₂).
³¹P{¹H}-NMR (162 MHz, CD₂Cl₂, 300 K): δ= 7.3.
[α]_{D}²⁰: - 11 (c = 0.21, CHCl₃).

### Method b): Preparation of the Iridium complex C1 with isolated ligand B1

The same method as described above is used to prepare the metal complex with the difference that the isolated ligand B1 is used instead of the crude ligand B1. The isolated metal complex is identical with metal complex C1 prepared by method a).

### Method c): Preparation of the Iridium complex C1 with isolated ligand B1 and [Ir(cod)₂]BArF

To a solution of 13.3 mg of [Ir(cod)₂]BArF and in 0.5 ml of CD₂Cl₂ are added 4 mg of ligand B1 and the solution stirred for 10 min. at 25°C. The ³¹P-NMR of this solution is identical with that of the complex C1 prepared by method a).

Isolated metal complexes as prepared by methods a) and b) as well as metal complex solutions as prepared by method c) can be used to perform catalytic reactions.

The following Ir-complexes are prepared by the same methods as described for complex C1. All complexes are obtained as crystalline solids:

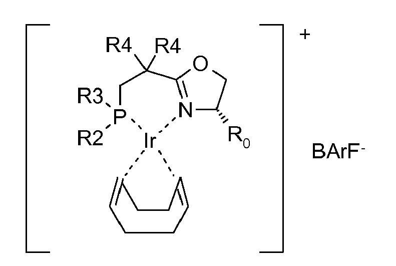

| Metal complex, example | ligand | R0 | R2 and R3 | R4 | ³¹P-NMR, chemical shift in CD₂Cl₂ |
|---|---|---|---|---|---|
| C1 | B1 | i-propyl | phenyl | methyl | 7.3 |
| C2 | B2 | t-butyl | phenyl | methyl | 5.9 |
| C3 | B3 | t-butyl | o-tolyl | methyl | 15.2 (minor signal) 8.0 (major signal) |
| C4 | B4 | t-butyl | xylyl | methyl | 5.4 |
| C5 | B5 | t-butyl | t-butyl | methyl | 25.8 |
| C6 | B6 | benzyl | phenyl | methyl | 8.5 |
| C7 | B7 | t-butyl | phenyl | phenyl | 5.3 |
| C8 | B8 | t-butyl | o-tolyl | phenyl | 8.5 (major signal) 1.0 (minor signal) |
| C9 | B9 | t-butyl | xylyl | phenyl | 5.2 |

### D) Application Examples:

### (a) Asymmetric Hydrogenation with Iridium complexes

### General Asymmetric Hydrogenation Procedure:

Under Argon, a high pressure steel autoclave with a glass insert and a magnetic stir bar is loaded with the isolated catalyst (0.002 mmol) or with a catalyst solution (0.002 mmol) which is prepared in situ from the ligand and [Ir(cod)₂]BArF in CH₂Cl₂. To the catalyst, a solution of 0.2 mmol of substrate in CH₂Cl₂ is added. The amount of CH₂Cl₂ is selected so that the final substrate concentration is 0.2 M. The argon atmosphere is exchanged against hydrogen and the hydrogen pressure is set to the pressure that is given in the following tables. The hydrogenation is started by switching on the stirrer. After 2 hours, the hydrogen is released and the solution is concentrated in a stream of nitrogen, diluted with 5 ml of hexane and analyzed directly for conversion (GC, achiral column, Restek Rtx-1701, 30 m,) and ee (GC or HPLC). Alternatively the solution is passed through a small plug of silica (hxd: 2 mmx 1 mm) and the filtrate analyzed directly for conversion (GC) and ee (GC or HPLC).

| | Substrate | Determination of ee: |
|---|---|---|
| S1 | 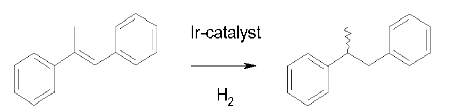 | HPLC, Column: Chiralcel OJ |
| S2 | 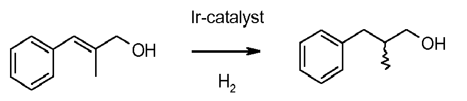 | HPLC, Column: Chiralcel ODH |
| S3 | 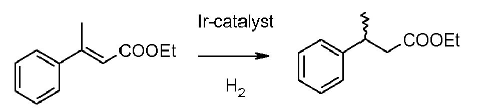 | HPLC, Column: Chiralcel OBH |
| S4 | 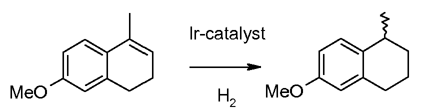 | HPLC, Column: Chiralcel ODH |
| S5 | 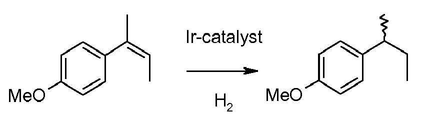 | HPLC, Column: Chiralcel ODH |
| S6 | 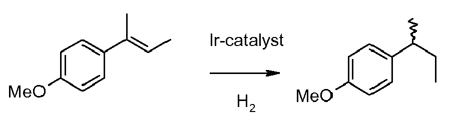 | HPLC, Column: Chiralcel ODH |
| S7 | 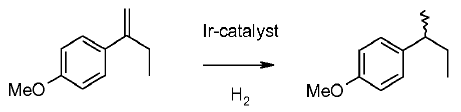 | HPLC, Column: Chiralcel ODH |
| S8 | 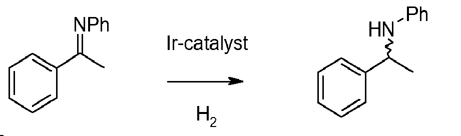 | HPLC, Column: Chiralcel ODH |

### Results of Hydrogenations:

**(molar substrate / catalyst ratio= 100; hydrogen pressure= 50 bar;**

| Entry | Substrate | catalyst, Ir complex | Conversion [%] | ee [%] | Configuration |
|---|---|---|---|---|---|
| 1 | S1 | C2 | 100 | 97 | R |
| 2 | S1 | C3 | 100 | 90 | R |
| 3 | S1 | C4 | 100 | 98 | R |
| 4 | S1 | C5 | 100 | 93 | R |
| 5 | S2 | C1 | 100 | 81 | n.d. |
| 6 | S2 | C2 | 100 | 94 | n.d. |
| 7 | S2 | C3 | 100 | 96 | n.d. |
| 8 | S2 | C4 | 100 | 93 | n.d. |
| 9 | S2 | C6 | 100 | 88 | n.d. |
| 10 | S2 | C8 | 87 | 95 | n.d. |
| 11 | S3 | C1 | 100 | 77 | R |
| 12 | S3 | C2 | 100 | 95 | R |
| 13 | S3 | C3 | 100 | 80 | R |
| 14 | S3 | C4 | 100 | 94 | R |
| 15 | S3 | C5 | 100 | 94 | R |
| 16 | S3 | C6 | 100 | 85 | R |
| 17 | S3 | C9 | 75 | 88 | R |
| 18 | S4 | C1 | 100 | 68 | S |
| 19 | S4 | C2 | 100 | 94 | S |
| 20 | S4 | C3 | 100 | 96 | S |
| 21 | S4 | C4 | 100 | 94 | S |
| 22 | S4 | C5 | 100 | 72 | S |
| 23 | S4 | C6 | 100 | 82 | S |
| 24 | S4 | C7 | 96 | 38 | S |
| 25 | S5 | C2 | 100 | 83 | S |
| 26 | S5 | C4 | 100 | 96 | S |
| 27 | S6 | C1 | 100 | 85 | R |
| 28 | S6 | C2 | 100 | 89 | R |
| 29 | S6 | C3 | 100 | 82 | R |
| 30 | S6 | C4 | 100 | 86 | R |
| 31 | S6 | C6 | 100 | 90 | R |
| 32 | S7 | C6 | 100 | 66 | S |
| 33 | S8 | C1 | 100 | 84 | R |
| 34 | S8 | C3 | 100 | 79 | R |
| 35 | S8 | C4 | 100 | 63 | R |

| | | | | | |
|---|---|---|---|---|---|
| n.d.= not determined | | | | | |

### (b) Asymmetric Allylic Alkylation with Palladium Complexes:

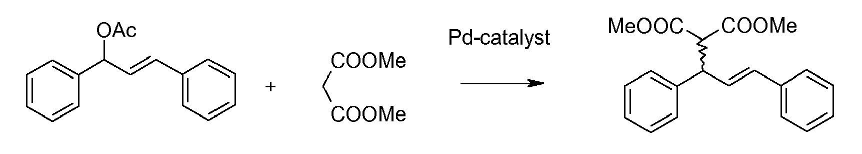

[Pd(allyl)Cl]₂ (0.5 eq) and ligand (1 eq) are mixed and dissolved in 0.2 mL of CH₂Cl₂ and stirred for 30 min. The substrate is added (100 mg, 10 eq) and the mixture is cooled to 0°C. Dimethylmalonate (30 eq), N,O-bis(trimethylsilyl)trifluoroacetamide (BSA) (30 eq) and NBu₄F (10 eq) are dissolved in 1 mL of CH₂Cl₂ and added. After 2 hours the reaction is quenched with sat. NH4Cl solution and extracted. The solvent is removed. After purification on silica (10 g, eluent: pentane: ethyl acetate: NEt₃ = 18:1:1) the product is analyzed for enantiomeric excess (HPLC, ADH).

| Entry | Ligand | ee |
|---|---|---|
| 101 | B1 | 95.7% |
| 102 | B2 | 94.5% |
| 103 | B7 | 94.1% |
| 104 | comparison with state of art ligand (S.R. Gilbertson et al. (Chem. Commun. (1997) 975-976): 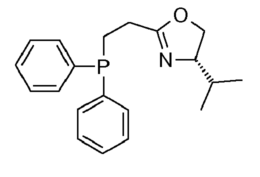 | 86% |

The results in the above table show the unexpected positive effect of the R₄ groups compared with hydrogen in the state of the art ligand on the enantioslectivity of a catalytic reaction.

## Claims

1. Chiral compounds of the formula (1), which are optically pure or highly optically enriched 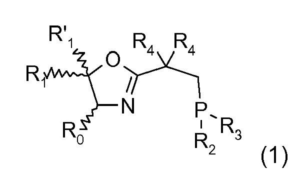 in which
R₀ is C₁-C₁₂-alkyl which is unsubstituted or substituted by 1 to 2 C₁-C₄-alkoxy; cyclopentyl or cyclohexyl, which is unsubstituted or substituted by 1 to 3 C₁-C₄-alkyl or C₁-C₄-alkoxy; or benzyl, phenyl or naphtyl which is unsubstituted or substituted by 1 to 3 C₁-C₄-alkyl, C₁-C₄-alkoxy, C₁-C₄-fluoroalkyl or C₁-C₄-fluoroalkoxy, F or Cl, each of R₁ and R'₁ independently is hydrogen or has the meaning of R₀ whereby R₁, R'₁ and R₀ can be same or different,
R₂ and R₃ are independently a C-bonded hydrocarbon radical or a heterohydrocarbon radical, and
each of both R₄ is C₁-C₆-alkyl, cyclopentyl, cyclohexyl, phenyl, methylphenyl, methylbenzyl or benzyl, or both R₄ together form an aliphatic C₄-C₆ carbocycle.

2. Compounds of claim 1, wherein R₂ and/or R₃ as a C-bonded hydrocarbon radical or a heterohydrocarbon radical is selected from the group consisting of linear or branched C₁-C₁₈-alkyl; unsubstituted or C₁-C₆-alkyl- or C₁-C₆-alkoxy-substituted C₅-C₁₂-cycloalkyl or C₅-C₁₂-cycloalkyl-CH₂-; phenyl, naphthyl, furyl or benzyl; or halogen-, C₁-C₆-alkyl-, trifluoromethyl-, C₁-C₆-alkoxy-, trifluoromethoxy-, (C₆H₅)₃Si, (C₁-C₁₂-alkyl)₃Si or secondary amino-substituted phenyl, naphthyl, furyl or benzyl.

3. Compounds of claim 1, wherein R₂ and R₃ are identical C-bonded hydrocarbon radicals selected from the group of C₁-C₆-alkyl, unsubstituted cyclopentyl or cyclohexyl, or cyclopentyl or cyclohexyl substituted by 1 to 3 C₁-C₄-alkyl or C₁-C₄-alkoxy, benzyl and particularly phenyl, which are unsubstituted or substituted by 1 to 3 C₁-C₄-alkyl, C₁-C₄-alkoxy, C₁-C₄-fluoroalkyl or C₁-C₄-fluoroalkoxy, F and Cl.

4. Compounds of claim 1, wherein -PR₂R₃ is a cyclic phosphine group of one of the following formulae: 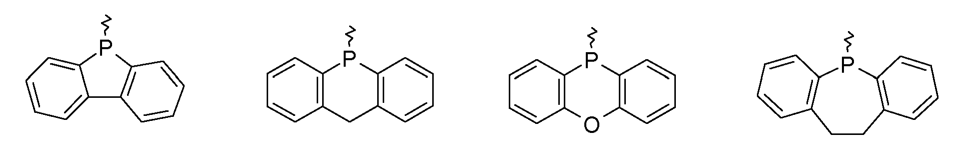 which are unsubstituted or mono- or polysubstituted by C₁-C₈-alkyl, C₄-C₈-cydoalkyl, C₁-C₆-alkoxy, C₁-C₄-alkoxy-C₁-C₄-alkyl, phenyl, C₁-C₄-alkyl- or C₁-C₄-alkoxyphenyl, benzyl, C₁-C₄-alkyl- or C₁-C₄-alkoxybenzyl , benzyloxy, C₁-C₄-alkyl- or C₁-C₄-alkoxybenzyloxy or C₁-C₄-alkylidenedioxy.

5. Compounds of claim 1, wherein -PR₂R₃ is a noncyclic secondary phosphine group selected from the group consisting of -P(C₁-C₆-alkyl)₂, -P(C₅-C₈-cycloalkyl)₂, -P(C₇-C₈-bicycloalkyl)₂, -P(o-furyl)₂, -P(C₆H₅)₂, -P[2-(C₁-C₆-alkyl)C₆H₄]₂, -P[3-(C₁-C₆-alkyl)C₆H₄]₂, -P[4-(C₁-C₆-alkyl)C₆H₄]₂, -P[2-(C₁-C₆-alkoxy)C₆H₄]₂, -P[3-(C₁-C₆-alkoxy)C₆H₄]₂, -P[4-(C₁-C₆-alkoxy)C₆H₄]₂, -P[2-(trifluoromethyl)C₆H₄]₂, -P[3-(trifluoromethyl)C₆H₄]₂, -P[4-(trifluoromethyl)C₆H₄]₂, -P[3,5-bis(trifluoromethyl)C₆H₃]₂, -P[3,5-bis(C₁-C₆-alkyl)₂C₆H₃]₂, -P[3,5-bis(C₁-C₆-alkoxy)₂C₆H₃]₂ and -P[3,5-bis(C₁-C₆-alkyl)2-4-(C₁-C₆-alkoxy)C₆H₂]₂.

6. Compounds of claim 5, wherein -PR₂R₃ is selected from -P(CH₃)₂, -P(i-C₃H₇)₂, -P(n-C₄H₉)₂, -P(i-C₄H₉)₂, -P(t-C₄H₉)₂, -P(C₅H₉)₂, -P(C₆H₁₁)₂, -P(norbornyl)₂, -P(o-furyl)₂, -P(C₆H₅)₂, -P[2-(methyl)C₆H₄]₂, -P[3-(methyl)C₆H₄]₂, -P[4-(methyl)C₆H₄]₂, -P[2-(methoxy)C₆H₄]₂, -P[3-(methoxy)C₆H₄]₂, -P[4-(methoxy)C₆H₄]₂, -P[3-(trifluoromethyl)C₆H₄]₂, -P[4-(trifluoromethyl)C₆H₄]₂, -P[3,5-bis(trifluoromethyl)CsH₃]₂, -P[3,5-bis(methyl)₂C₆H₃]₂, -P[3,5-bis(methoxy)₂C₆H₃]₂ and -P[3,5-bis(methyl)₂-4-(methoxy)C₆H₂]₂.

7. Compounds of any of the preceding claims, wherein R₄ is methyl or phenyl.

8. Compounds of any of the preceding claims, wherein R₀ is i-propyl, i-butyl, t-butyl or benzyl

9. Process for the preparation of the chiral compounds of any of claims 1 to 8, which includes the following steps:
(a) reaction of an acid chloride of formula (2) 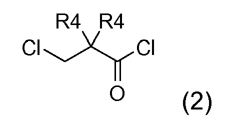 wherein R₄ is as defined in claim 1
with a chiral aminoalcohol of formula (3) 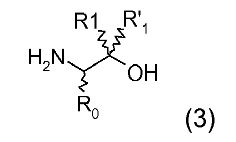 wherein R₁, R'₁ and R₀ are as defined in claim 1,
to form the chiral amide of formula (4) 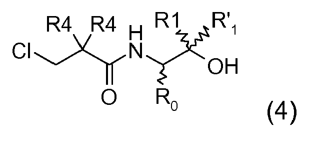
(b) cyclization of the chiral amide of formula (4) to a corresponding chiral oxazoline alkylene chloride of formula (5) 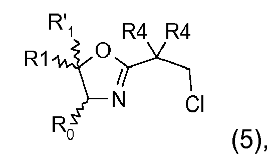 and
(c) reaction of the chiral oxazoline alkylene chloride of formula (5) with a metal phosphide of the formula M'-PR₂R₃ where M' is K, Na, or Li, and R₂ and R₃ are as defined in claim 1,
to give the chiral compounds of any of claims 1 to 8.

10. Process of claim 9, wherein step (c) is comprises reacting oxazoline alkylene chloride of formula (5) with a metal phosphide of formula M'PR₂R₃ in an inert solvent at a temperature between 50 and 80°C.

11. Process of claim 9, wherein step (c) is a one pot reaction comprising mixing a secondary diarylphosphine of formula HPR₂R₃ with an equimolar amount of KH and then adding a solution of the oxazoline alkylene chloride of formula (5).

12. Metal complexes of transition metals of the transition groups of the Periodic Table of the elements with a compound according to any of claims 1 to 8 as a ligand.

13. Process for preparing chiral organic compounds by asymmetric catalytic reactions, **characterized in that** the addition is carried out in the presence of catalytic amounts of at least one metal complex according to claim 12.

14. Process for preparing chiral organic compounds by asymmetric addition of hydrogen onto a carbon or carbon-heteroatom double bond in prochiral organic compounds in the presence of a catalyst, **characterized in that** the addition is carried out in the presence of catalytic amounts of at least one metal complex according to claim 12.

15. Use of the metal complexes according to Claim 12 as homogeneous catalysts for preparing chiral organic compounds by asymmetric addition of hydrogen onto a carbon or carbon-heteroatom double bond in prochiral organic compounds.
